# EUROPEAN PATENT APPLICATION

(11) **EP 1 003 333 A1**
(43) Date of publication of application: **24.05.2000**
(21) Application number: 98924647.5
(22) Date of filing: 16.06.1998
(51) Int. Cl.: H04N 5/46, G01C 21/00, H04B 1/06

(54) **RECEIVER**

(71) Applicant: MITSUBISHI DENKI KABUSHIKI KAISHA, Tokyo 100-8310 (JP)
(72) Inventor: KOYAMA, Hajime, Chiyoda-ku, Tokyo 100-8310 (JP)
(74) Representative: Pfenning, Meinig & Partner
(86) International application number: JP9802652
(87) International publication number: WO9966723

(57) **Abstract**

A television broadcasting system detecting apparatus for use on board a vehicle, comprising a vehicle position detector, a broadcasting system selector, a television receiver, a display and an audio unit with speakers. The vehicle position detector detects the vehicle's current position. The broadcasting system selector selects from a plurality of preset broadcasting systems a system that matches the detected vehicle position. The receiver receives transmissions based on the selected broadcasting system, and can normally ensure optimal receiving conditions.

## Description

### TECHNICAL FIELD

The present invention relates to a receiver which detects a television broadcasting system in effect where the vehicle is currently located and tuning automatically to the detected system in order to ensure optimal status of reception at all times.

### BACKGROUND ART

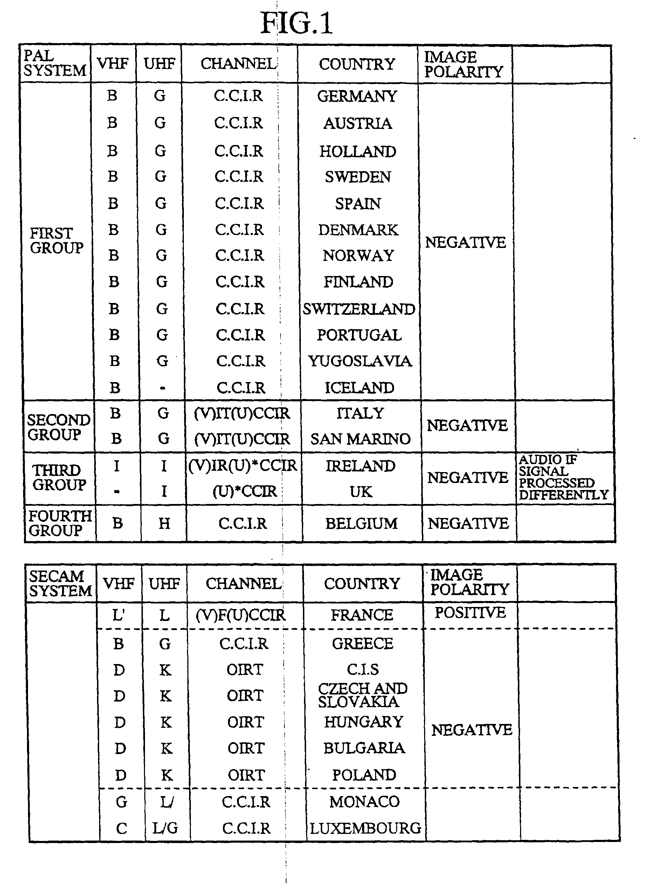

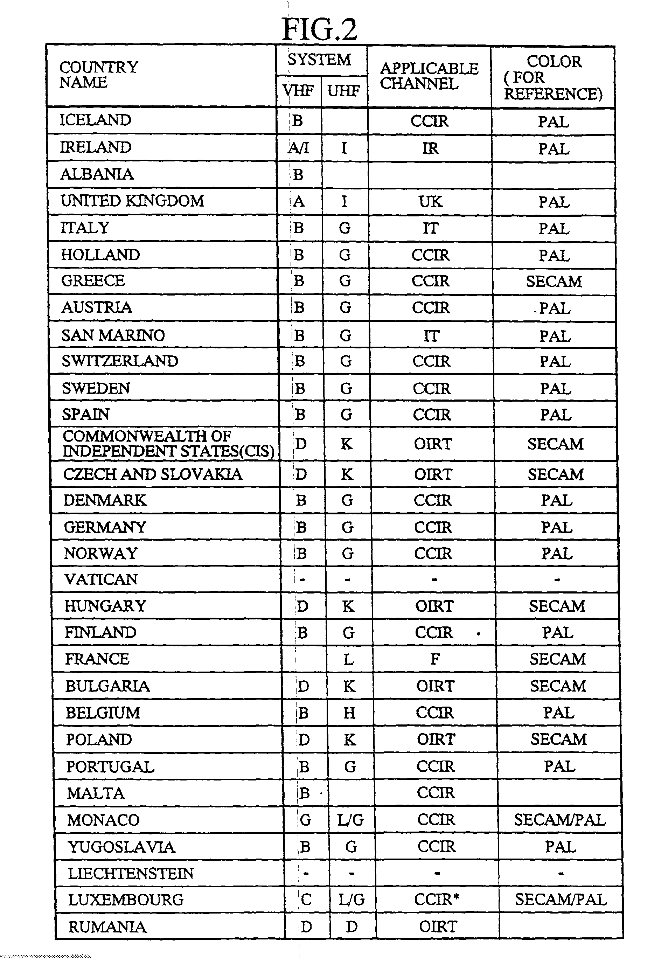

There exist a large number of television broadcasting systems, as listed in Fig. 1 showing television broadcasting systems corresponding to channel groups in Europe and Fig. 2 showing television broadcasting systems matched with channels in European countries. Different countries adopt different systems with specific channel frequencies assigned to each nation.

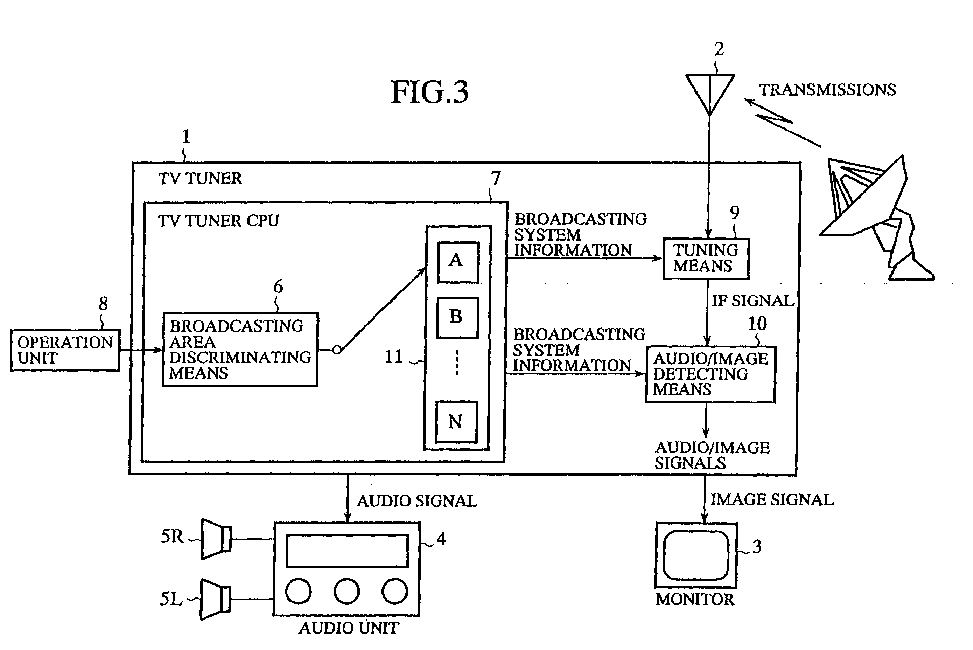

Fig. 3 depicts schematically the typical format of a conventional television receiver for use on board a vehicle in European countries. In Fig. 3, reference numeral 1 stands for a television tuner, 2 for a reception antenna attached to the television tuner 1, 3 for a display connected to the television tuner 1, 4 for an audio unit connected to the television tuner 1, and 5R and 5L for speakers.

The television tuner 1 comprises: a television tuner CPU 7 having broadcasting area discriminating means 6 for selecting a specific broadcasting system from among many systems; an operation unit 8 for manually operating the broadcasting area discriminating means 6 from outside the television tuner 1; tuning means 9 for tuning to signals received by the reception antenna on the basis of broadcasting system information output by the television tuner CPU 7; and audio/video detecting means 10 for detecting audio and video signals from an intermediate frequency (IF) signal output by the tuning means 9. Television broadcasting systems A, B, ..., N to choose from by use of the broadcasting area discriminating means 6 are stored beforehand in a memory 11.

The conventional television receiver in the above format works as follows: when television reception is normal, television signals received by the reception antenna 2 are input to the tuning means 9. On the basis of the broadcasting system information obtained, the tuning means 9 tunes to a desired channel and outputs an appropriate intermediate frequency signal. The IF signal is input to the audio/video detecting means 10 which detects audio and video signals based on the broadcasting system information. The video signal is fed to the display 3 for display. The audio signal is supplied to the audio unit 4 which activates the speakers 5R and 5L for audio output.

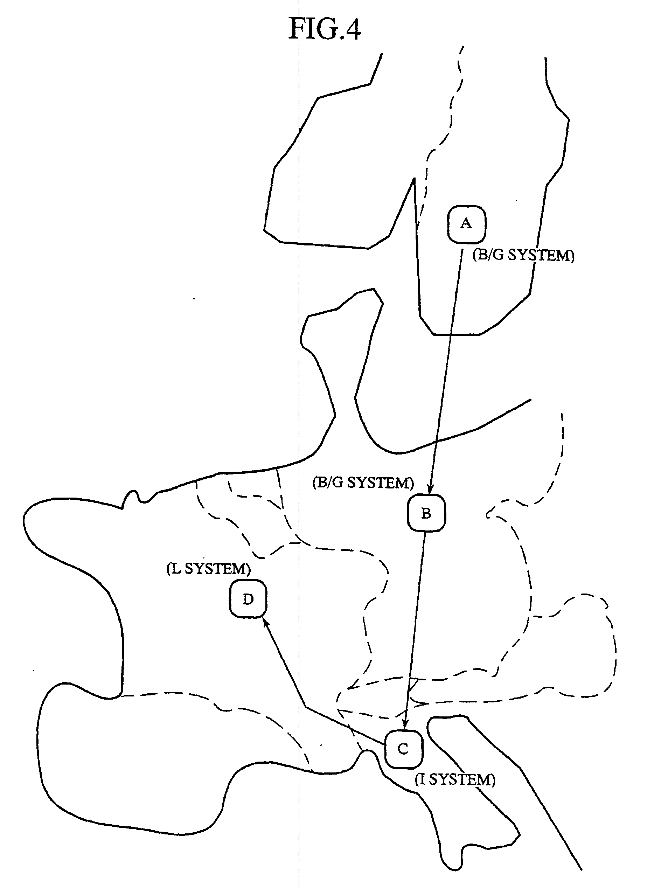

However suppose that, as shown in Fig. 4, the vehicle travels from country A (B/G system) through country B (B/G system) to country C (I system) in Europe. For the transit from country A to country B, the broadcasting system remains unchanged and there is no need to make additional settings on the television receiver. On the other hand, the movement from country B to country C involves a change from one television broadcasting system to another. A mismatch between the currently selected television broadcasting system and the vehicle's present position requires manual operation of the operation unit 8 to select a broadcasting system matching the vehicle's present position via the broadcasting area discriminating means 6 and retrieve same from the memory.

Conventional television broadcasting system detecting apparatuses of the above type are such that the transit from country A to country B involves no change in the broadcasting system with no need to make additional settings. However they involve the problem that the transit from country B to country C requires tuning to a different broadcasting system of the newly reached country. Switching the system from one broadcasting system to another takes time and effort. Furthermore users need to have advance knowledge of such television broadcasting systems.

It is therefore an object of the present invention to overcome the above-described drawbacks and disadvantages of the prior art and to provide a receiver for use on board a vehicle, the apparatus detecting the current position of the vehicle and checking, based on the vehicle position signal as detected, whether the vehicle's present position matches a currently selected broadcasting system. The apparatus further tuning automatically to another system in case of a mismatch so that the newly selected broadcasting system will match with the vehicle position.

### DISCLOSURE OF THE INVENTION

In carrying out the invention and according to one system thereof, there is provided a receiver for use on board a vehicle, comprising: a vehicle position detecting unit for detecting a current position of the vehicle; a memory means remembering and coupling a plurality of location information and the broadcasting systems that correspond to the location information; broadcasting system selecting unit for selecting a broadcast corresponding to the location information from the memory means and a receiver means for receiving television transmissions based on the selected broadcast system.

The apparatus in the format outlined above allows a matching broadcasting system to be selected automatically every time a mismatch occurs between the vehicle position and the currently selected broadcasting system. Working as it does, the apparatus ensures an optimum state of television reception without burdening the user with manual operation.

The receiver of the present invention is adapted for use with TV broadcast systems and can normally ensure optimal receiving conditions for the TV broadcasts.

The receiver of the present invention is adapted to couple a plurality of regional information with the area information pertaining to each country and can automatically ensure optimal receiving conditions with each area change.

In a preferred structure according to the invention, the receiver for use on board a vehicle may utilize as its vehicle position detecting unit an onboard navigator that receives global positioning satellite signals to determine where the vehicle is currently located. The use of the navigator simplifies the format of the apparatus and reduces its cost.

### BRIEF DESCRIPTION OF DRAWINGS

Fig. 1 is a table listing television broadcasting systems corresponding to channel groups in Europe;
Fig. 2 is a table listing television broadcasting systems matched with channels in European countries;
Fig. 3 is a schematic view showing a typical format of a conventional television receiver for use on board a vehicle in Europe;
Fig. 4 is a sketched map of Europe showing area-wise television broadcasting systems;
Fig. 5 is a schematic block diagram of a television receiver incorporating a receiver embodying the invention and for use on board a vehicle; and
Fig. 6 is a flow chart of steps showing how the apparatus works.

### BEST MODE FOR CARRYING OUT THE INVENTION

The best mode for carrying out this invention will now be described in detail with reference to the accompanying drawings.

### First Embodiment

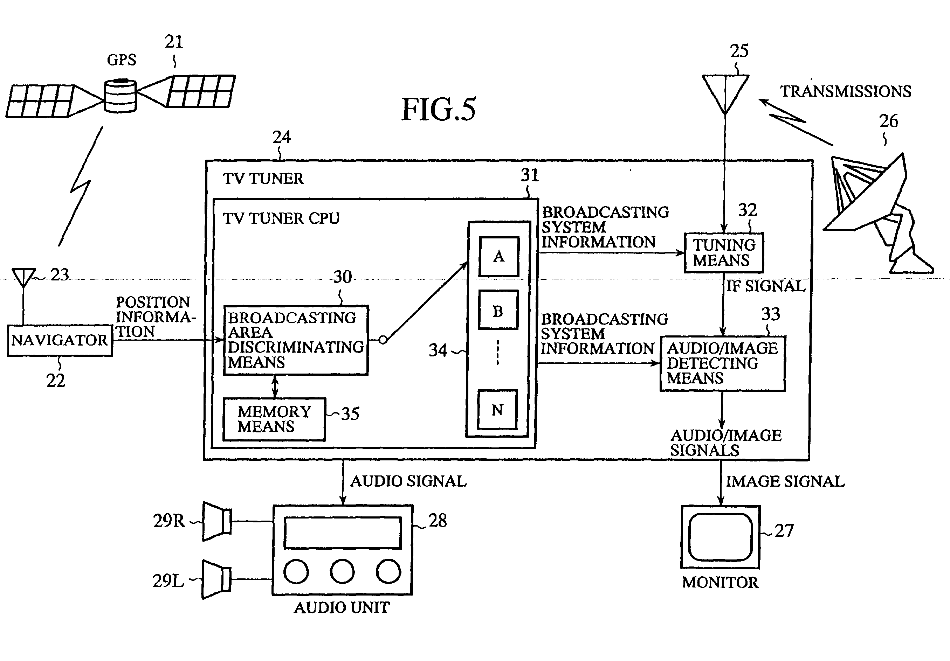

Fig. 5 is a schematic block diagram of a television receiver incorporating a receiver practiced as a first embodiment of the invention. In Fig. 5, reference numeral 21 stands for a satellite that outputs a global positioning satellite (GPS) signal; 22 is for a navigator equipped with an antenna 23 for receiving the GPS signal and acting as vehicle position detecting means; 24 is for a television tuner for admitting position information from the navigator 22; 25 is for a reception antenna for receiving television transmissions from an antenna 26 of a broadcasting station; 27 is for a display for admitting and displaying an video signal from the television tuner 24; and 28 is for an audio unit which admits an audio signal from the television tuner 24 and which has speakers 29R and 29L for audio signal output.

The television tuner 24 comprises: a television tuner CPU 31 having broadcasting area discriminating means 30 for selecting from a memory means 35 a broadcasting system matching the current vehicle position based on the position information from the navigator 22 and coupling the preset plurality of location information with the broadcasting system corresponding respectively to the location information; tuning means 32 for tuning to a signal received by the antenna 23 on the basis of broadcasting system information output from the television tuner CPU 31; and audio/video detecting means 33 for detecting audio and video signals from an intermediate frequency (IF) signal output by the tuning means 32. Broadcasting systems A, B, ..., N, any one of which is selected by the broadcasting area discriminating means 30, are stored beforehand in a memory 34.

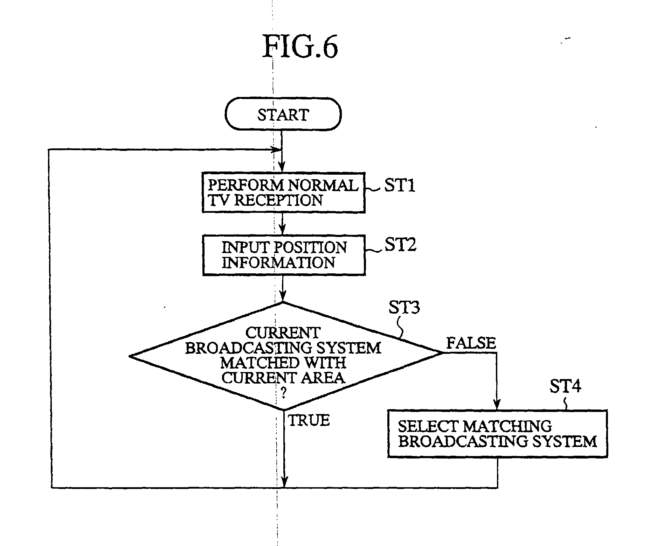

The first embodiment works as follows: Fig. 6 is a flow chart of steps showing how the apparatus of Fig. 5 operates. When normal television reception is in effect (step ST1), the television signal received by the reception antenna 25 is input to the tuning means 32. The tuning means 32 tunes to an appropriate channel based on the broadcasting system information acquired and outputs an IF signal accordingly. The IF signal is input to the audio/video detecting means 33 which in turn detects audio and video signals based on the broadcasting system information. The video signal is fed to the display 27 for display, and the audio signal is supplied to the audio unit 28 for audio output from the speakers 29R and 29L.

Meanwhile, the navigator 22 receives, via the antenna 23, the GPS signal from the satellite 21 and detects the vehicle's current position based on the received signal. As the vehicle changes position while receiving television transmissions, the apparatus receives the current vehicle position from the navigator (step ST2). A check is made to see if the currently selected broadcasting system matches the vehicle position (step ST3). In the case of a match, the sequence returns to step ST1 and the process is repeated. In case of a mismatch, the broadcasting area discriminating means 31 selects from the memory 34 another broadcasting system corresponding to the vehicle's current position and switches automatically to the newly selected system (step ST4).

As described, the first embodiment selects and switches automatically to an optimal broadcasting system every time the currently selected broadcasting system fails to match the vehicle's detected position. This eliminates the need for manual switching operations unlike the conventional apparatus. Furthermore it frees the user and television broadcasts can be seen in a normally optimal state of reception.

Dedicated vehicle position detecting means may be included in the apparatus. Alternatively, an existing onboard navigator may be used as the vehicle position detecting means. The alternative setup will simplify the format of the apparatus and reduce its cost.

The accompanying figures list illustratively television broadcasting systems categorized by country for search purposes. Alternatively, the broadcasting systems may be coded by area. It is also possible for channel frequencies to be selected in the same manner as described, i.e., on the basis of the vehicle's detected position.

Further, although embodiment 1 above was explained using a TV broadcast as a received signal, it is possible to use a receiver receiving a radio broadcast or the like.

### INDUSTRIAL APPLICABILITY

As described above, the receiver for use on board a vehicle automatically selects and switches to a local broadcasting system of the geographical area that the traveling vehicle has crossed into from another area where a different broadcasting system is in effect. As such, the apparatus is adapted for use on board vehicles whose movement crosses over areas of different broadcasting systems.

## Claims

1. A receiver for use on board a vehicle, comprising:
vehicle position detecting means for detecting a current position of said vehicle;
a memory means for coupling a plurality of location information and broadcasting systems corresponding respectively to the location information;
a broadcasting system selection means for selecting a broadcasting system corresponding to the location information from said memory means based on the vehicle position information as detected by said vehicle position detecting means; and
a receiving means which receives on the basis of the selected broadcasting system.

2. A receiver according to claim 1 wherein the broadcasting system is a TV broadcast system.

3. A receiver according to claim 1 wherein the plurality of location information is regional information with respect to each country.

4. A receiver for use on board a vehicle according to claim 1, wherein said vehicle position detecting means is an onboard navigator receiving global positioning satellite signals.
